# EUROPEAN PATENT SPECIFICATION

(11) **EP 3 802 030 B1**
(45) Date of publication and mention of the grant of the patent: **26.07.2023**
(21) Application number: 19731832.2
(22) Date of filing: 28.05.2019
(51) Int. Cl.: B27F 7/15, B23B 47/28, B23B 51/00

(54) **JIG FOR MANUFACTURE OF TRUSSES CONFIGURED WITH PREFORMED HOLES**
VORRICHTUNG ZUR HERSTELLUNG VON MIT VORGEFORMTEN LÖCHERN VERSEHENEN GERÜSTEN
GABARIT POUR LA FABRICATION DE FERMES CONSTITUÉES DE TROUS PRÉFORMÉS

(30) Priority: 28.05.2018 AU 2018901880
(43) Date of publication of application: 14.04.2021
(73) Proprietor: Illinois Tool Works, Inc., Glenview, Illinois 60025 (US)
(72) Inventor: KENNELLY, Bernard Joseph, Glenview, Illinois 60025 (US)
(74) Representative: HGF
(86) International application number: PCT/US2019/034154
(87) International publication number: WO 2019/231900

(56) References cited:
- WO-A1-2016/191426
- DE-C1- 4 425 446
- US-A- 3 241 585
- US-A- 3 358 589
- US-A- 3 888 169
- US-A- 4 158 523
- US-A- 5 586 846

## Description

### Priority

This application claims priority to and the benefit of Australian Patent Application No. 2018901880, filed May 28, 2018.

### Field of the Invention

The present invention provides improvements in the manufacture of trusses with preformed holes. More particularly, the invention provides a jig according to the preamble of claim 1 for forming a truss, the jig being configured with at least one guide for guiding a drill bit such that a hole formed in the truss by the drill bit is correctly located. The invention also provides a method of manufacturing a truss using the jig. The invention has particular, though not exclusive, application to roof trusses.

### Background

In some types of building construction, including construction of timber frame houses, it is conventional to construct the roof using trusses prefabricated in a factory, by means of a jig, and transported to site for securement, typically via fasteners such as screws, atop wall frames or other wall structure of the building. Prefabrication reduces much of the skill and time which would otherwise be needed to construct the roof at site, as well as attendant hazards associated with the roof installation - a procedure carried by tradespersons out at height.

Generally speaking, the greater the extent to which such trusses can be preconfigured in the factory for installation at site, the greater the rapidity and reliability of the installation and the lower the attendant safety risks. There is thus an ongoing imperative to devise efficient, repeatable and accurate ways of preconfiguring trusses for installation.

An example of machine for carrying out manufacturing operations on large structures, such as a roof truss, is disclosed in Document US3888169A, which discloses a jig according to the preamble of claim 1. The machine comprises a table comprising several plates joined edge to edge to form an elongated table. A jig for making a roof truss is fastened to the table by bolts screwed into five-eighths inch holes tapped in the table plates on a six-inch grid spacing. The jig comprises various angle irons and junction brackets.

### Summary of the Invention

The invention is defined by the appended claims. According to a first aspect of the present invention, there is provided a jig for forming a truss which comprises interconnected elongate members and is to be part of a building structure, the jig comprising a support structure on which the members can be arranged, and stops adapted to abut, at predetermined positions, ones of the members so arranged and thus to hold the members fixed for interconnection, the jig being configured with at least one guide adapted to guide a rotating drill bit such that a hole in the truss drilled by the bit is correctly positioned. The or each guide comprises a body and a passage through the body to guide the drill bit axially therein. The or each body is defined by a said stop.

Preferably, at least one stop which defines a said body is relocatable with respect to the support structure so as to be able instead to abut at least one of the members at another of said predetermined positions and thus define a said stop at that other position.

Preferably, at least one stop which defines a said body is relocatable with respect to the support structure so as to be able to abut at least one said member at another said predetermined position.

Preferably, the or each relocatable stop is symmetrical and/or reversible so as to be able to abut said at least one of the members at the other predetermined position.

Preferably, the or each stop which defines a said body has a face arranged to abut a face of a said one of the members along an axis thereof when the members are held fixed, and the or each passage through the body defined by that stop opens through the face thereof.

The or each such stop may be configured in the form of a block.

Preferably, the, each, or at least one said stop which defines a said body is configured with plural said passages, so as to comprise plural said guides each comprising that body and a respective one the plural passages.

Preferably, in the, each, or at least one said, stop configured with plural said passages, the passages comprise ones which extend along respective axes which are not parallel.

Preferably, in the, each, or at least one said, stop configured with plural said passages, the passages comprise ones arranged at separate positions along an axis along which the stop is arranged to abut a said member in a plane of the truss.

Preferably, in the, each, or at least one said, stop configured with plural said passages, the passages comprise at least one said passage which extends at right angles to an axis along which the stop is arranged to abut a said member in a plane of the truss, such that the hole drilled by the bit guided axially in that passage is at right angles to a longitudinal axis of the member.

Preferably, in the, each, or at least one said, stop configured with plural said passages, the passages comprise at least one said passage which extends oblique to an axis along which the stop is arranged to abut a said member in a plane of the truss, such that the hole drilled by the bit guided axially in that passage is oblique to a longitudinal axis of the member.

Preferably, the stops and guide(s) are positionable at variable locations within a plane of the truss according to the configuration of the truss and the dimensions of the members.

In a preferred embodiment of the invention, the support structure comprises spaced apart stands each of which is configured to support ones of the members that are to be interconnected at a respective panel point in the truss, and the guides and stops are arranged on ones of the stands.

Preferably, the stands are disposable at variable positions such that the stops and guide(s) are positioned at said locations.

Preferably, the stands include a heel stand adapted to support ones of the members that are to be interconnected at a heel at one of opposed ends of the truss, on which stand is arranged at least one said guide such that the drill bit guided thereby forms a said hole in the heel at said one end. Preferably, the stands further include a heel stand adapted to support ones of the members that are to be interconnected at a heel at the other of said opposed ends of the truss, on which stand is arranged at least one said guide such that the drill bit guided thereby forms a said hole in the heel at said other end.

Preferably, the stands include at least one which is adapted to support ones of the members that are to be interconnected at an internal panel point in the truss, on which stand is arranged at least one said guide such that the drill bit guided thereby forms a said hole at the internal panel point.

Preferably, the stands are configured such that opposed sides of said ones of the members arranged on the stands are accessible to permit application of nail plates to both of said sides to effect the interconnection at each panel point.

In an alternative embodiment of the invention, the support structure comprises a table on which the stops and guide(s) are arranged.

Preferably, the stops and guides are disposable at variable positions on the table to be positioned at said locations.

Preferably, at least one said guide is arranged on the table adjacent a position at which ones of the members to be interconnected at a heel, at one of opposed ends of the truss, are supported on the table, such that the drill bit guided thereby forms a said hole in the heel at said one end. Preferably, at least one said guide is arranged on the table adjacent a position at which ones of the members to be interconnected at a heel at the other end are supported on the table, such that the drill bit guided thereby forms a said hole in the heel at said other end.

Preferably, opposed sides of said ones of the members are accessible to permit application of nail plates to both of said sides to effect the interconnection at each panel point.

According to a second aspect of the present invention, there is provided a method of forming, using the jig, said truss, the method including, with the members arranged on the support structure and said ones of the members abutted by the stops at said predetermined positions such that the members are held fixed by the stops, effecting guidance of a said rotating drill bit by the or each guide, such that the or each drilled hole is correctly positioned.

Preferably, said members are timber.

Preferably, the interconnection of said members is effected by applying nail plates to the members.

Preferably, the nail plates are applied to both of said sides.

Preferably, the or each stop defining the body of a said guide is arranged such that the hole drilled by the bit guided axially in the passage thereof passes through a said member which is abutted directly by that stop.

Preferably, the truss comprises top and bottom chords and webs comprising said members.

Preferably, the or each hole is to receive a through fastener for securing the truss to a support structure underlying it in the building structure.

### Brief Description of the Drawings

The invention will now be described, by way of non-limiting example only, with reference to the accompanying drawings, in which:
Figures 1A to 1C are perspective views showing details of a jig, for forming a truss, to which the invention is applicable;
Figures 2A to 2D show an upper support frame, of a given one of plural station boxes of the jig, and a stop according to a first embodiment of the invention applied to that frame and arranged to abut a member of a truss in the manufacture thereof using the jig, the stop being configured with a guide for a rotating drill bit such that a hole in the truss, drilled by the bit through a heel/pitching point thereof, is correctly positioned, these figures illustrating successive stages in the manufacture of a truss and preconfiguring thereof with the hole;
Figure 3A shows the upper support frame of a given one of the station boxes and a stop according to a second embodiment of the invention which is applied to that frame and arranged to abut a member of a truss in the manufacture thereof using the jig, the stop being configured with guides each of which is for a rotating drill bit such a respective hole in the truss, drilled by the bit, is correctly positioned;
Figure 3B is an exploded view of a support member of the upper support frame and the stop of the second embodiment, and fasteners used to secure the latter to the former;
Figures 4A and 4B are perspective views showing successive stages in the arrangement of a chord member and web member on the jig, during manufacture of a truss thereon, such that they are supported on a said upper support frame thereof to which a stop according to the second embodiment is applied;
Figures 5A and 5B are a plan view and perspective view, respectively, showing the position of the stop relative to the chord and web members whereby an oblique guide with which the stop is configured is located such that an oblique hole in the truss, drilled by the bit under the guidance of that guide, is correctly positioned;
Figures 6A and 6B are plan views corresponding to Figure 5B showing said position of the stop relative to the chord and web members and the manner in which the drill bit is guided by the oblique guide;
Figure 7 is a side elevation view showing guidance of the drill bit by the stop of either the first or the second embodiment;
Figure 8A shows an alternative jig and a stop according to the second embodiment applied to that jig so as to be arranged to abut a member of a truss in the manufacture thereof using the alternative jig;
Figure 8B shows details of a mounting of the stop of the second embodiment to the alternative jig;
Figure 8C is an exploded view showing parts of an assembly via which the stop is mounted to the alternative jig;
Figure 8D shows exemplary mounting details and positions of stops applied to the alternative jig;
Figures 9A and 9B show alternative assemblies each of which comprises a truss, manufactured and preconfigured with a hole (at a heel/pitching point therein) using a said jig in accordance with the invention, an underlying structure on which the truss is supported and a tie-down screw received through the hole to fix the truss to the structure; and
Figures 10A and 10B show alternative assemblies each of which comprises a truss, manufactured and preconfigured with a respective hole (at a location other than a heel/pitching point) using a said jig in accordance with the invention, an underlying structure on which the truss is supported and a tie-down screw received through the hole to fix the truss to the structure.

### Detailed Description of Preferred Embodiments of the Invention

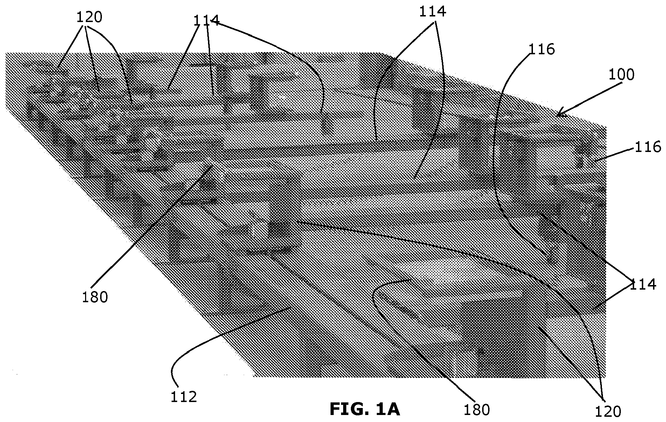

Shown in Figure 1A is an exemplary jig 100 to which the invention is applicable. The jig 100 comprises a floor-mounted frame including a base rail 112 and spaced apart apex rails 114 each of which projects from the base rail 112 and at right angles to it. The jig 100 further comprises station boxes 120, several of which ("the base rail station boxes") are mounted to the base rail 112 and moveable therealong, and each of the remaining ones of which ("the apex rail station boxes") is mounted to a respective apex rail 114 and moveable therealong. During manufacture of a truss using the jig 100, the base rail station boxes 120 support the member(s) defining the bottom chord of the truss, and the apex rail station boxes support the members defining top chords of the truss. The base rail station boxes 120 are moved along the base rail 112 so as to support the bottom chord member(s) at respective positions where panel points, i.e. junctions between members of the truss, are to be formed, and the apex rail station boxes 120 are moved along the respective apex rails 114 according to the slope or pitch which the top chord members are to assume in the truss and likewise to support the top chord members at positions at which respective panel points are to be formed; to this end, the apex rails 114 are supported on casters 116 such that the lateral positions thereof along the rail 112 can be adjusted. The jig 100 is automated and powered, whereby the positioning of the station boxes 120 along the rails 112 and 114 is facilitated. Each station box 120 is fitted with pneumatic air locking and release mechanisms, whereby engagement of the truss members with, and disengagement of those truss members from, the station boxes 120 is rapid and does not cause operator fatigue.

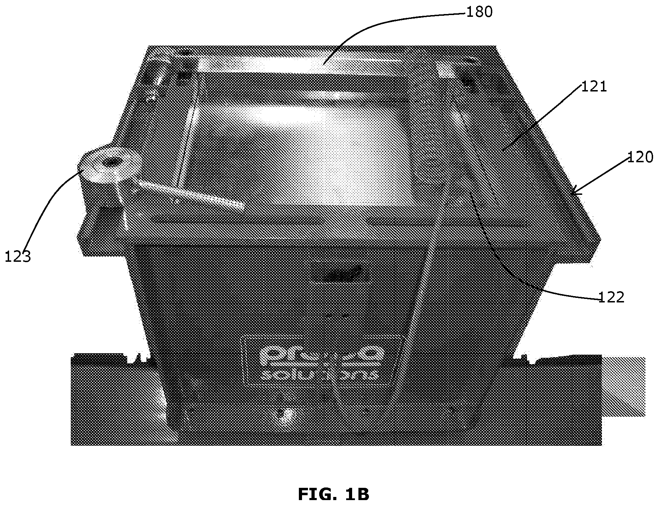

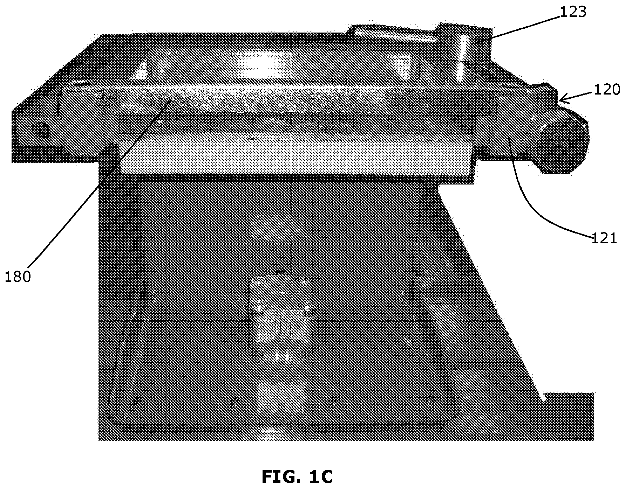

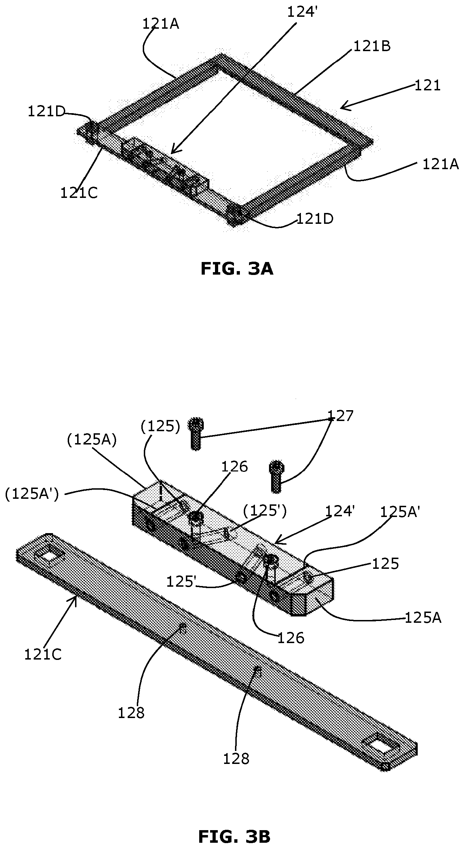

Referring to Figures 1B and 1C, each station box 120 includes an upper support frame 121 (also shown in Figure 3A), which delimits an opening 122, and a pressure plate 122 supported from the frame 121, an upper surface of which plate is recessed with respect to that frame. The pressure plate 122 is upwardly displaceable to apply pressure to a respective nail plate used to secure members of the truss at the respective panel point, as will be described in further detail later.

Each station box 120 is provided with at least one cam member 123 and respective opposing stationary member 180, releasably mounted to the frame 121 via screws, which can cooperate to define stops that clamp at least one member of the truss therebetween.

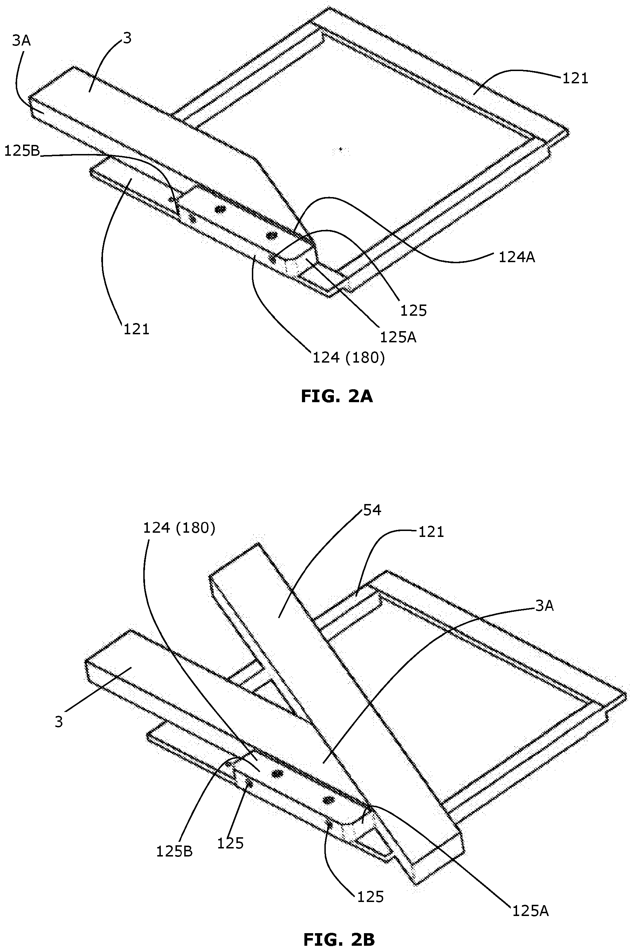

Figures 2A to 2D show successive stages in the formation of a panel point - more particularly a heel/pitching point - of a standard gable truss fabricated using the jig 100 in which particular ones 124 of the members 180 applied to the frames 121 are, in accordance with a first preferred embodiment of the invention, configured with holes 125, centres of which lie in a plane from which parallel opposed top 125C and bottom 125D faces of the member 124 are equally spaced, each of which holes defines a guide for a drill bit to ensure correct location and orientation of a hole, formed by the drill bit, with which the truss is to be preconfigured. Fabrication of the gable truss and the preconfiguring thereof with at least one hole will now be described.

To begin with, members 3 of which the truss bottom chord is to be comprised are arranged on the base rail boxes 120 and are abutted and aligned, then centred on the jig 100 and restrained from moving along the bottom chord axis. The laterally outermost base rail boxes 120 ("heel boxes") and the base rail boxes 120 laterally inward thereof ("bottom chord boxes") are then moved along the rail 112 until they are located where the panel points (including opposed heels of the truss) are to be. Each of the heel boxes 120 is positioned such that a datum thereon is aligned with a respective datum on the bottom chord member 3 which it supports, whereby the hole 125 in the stop 124 on that heel box is accurately positioned to guide a drill bit such that a hole drilled through that chord member, and the respective top chord member 5 together with which it forms a heel, is at the desired position. In the present embodiment, the datum on each heel box 120 is defined by the laterally outer side face 125A of the member 124 thereon, which face extends parallel to the central axis of the hole 125, and the datum on the bottom chord member 3 supported on that heel box is the tip of the chamfered end of that chord member, though either or each of the data on heel box 120 and member 3 can vary without departure from the invention; for example, it may take the form of a marking arranged to align with the datum on the other of the heel box 120 and member 3. Also, while it is convenient that the datum on the heel box 120 be defined by/on the stop 124, that datum can instead be defined elsewhere on the heel box - e.g. on another member mounted to or defined by the frame 121 - so long as the central axis of the hole 125 in the stop 124 can be located with respect to that datum whereby it will be in the correct position for drilling into the truss member(s) when alignment of the data has been effected.

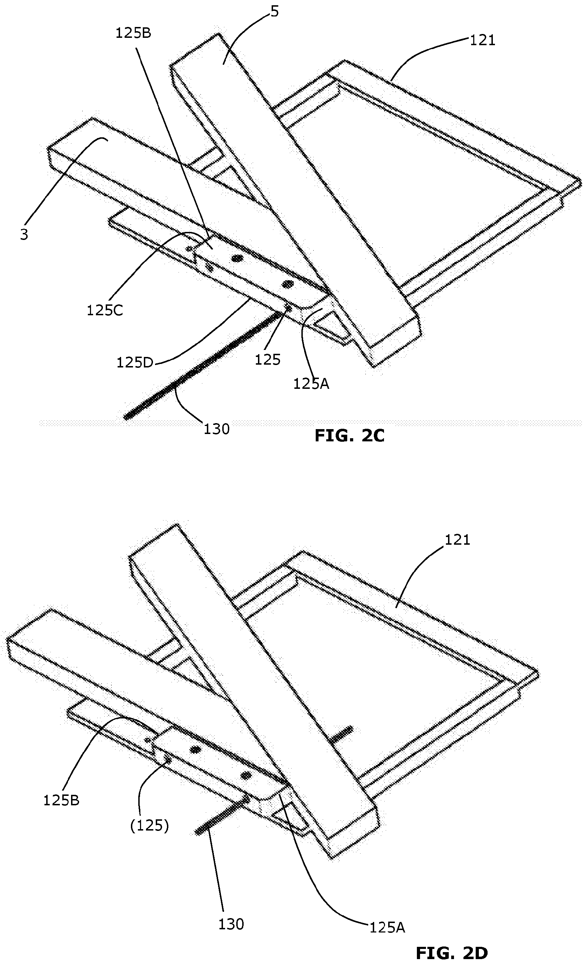

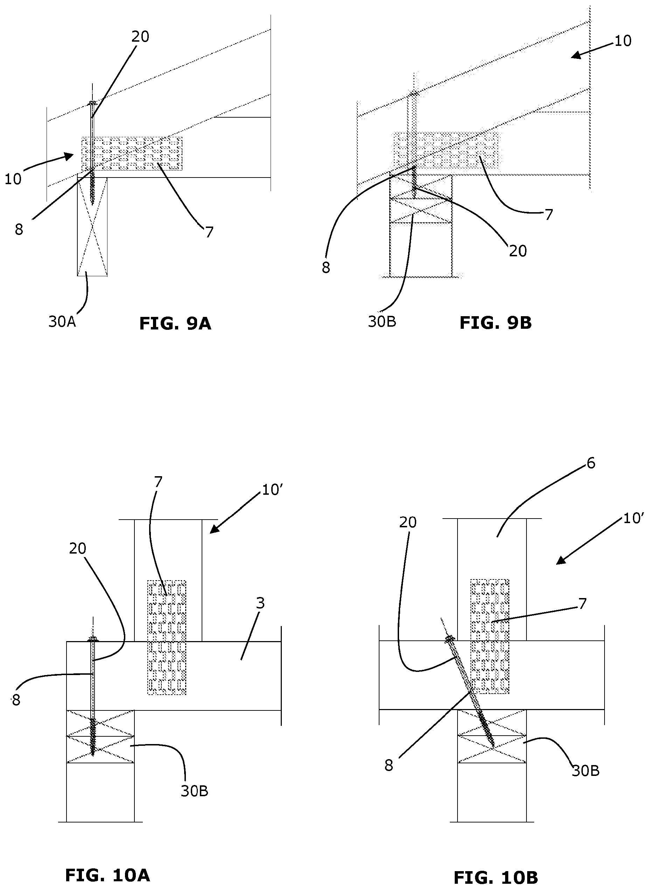

Next, referring to Figure 2B, the remaining truss members, including top chord members 5 (one of which is illustrated) and web members (not shown), are arranged over the base rail boxes 120, and appropriately positioned apex rail boxes 120 and the cooperating stops 123, 180/124 on the boxes 120 are operated to clamp the truss members such that they are held fixed in the correct configuration, whereby an edge face of the truss member (the latter being bottom chord member 3 and the former being a lower edge face 3A of that member in the example shown) is abutted by upright face 124A of the member 124. If and where appropriate, a curved member can be interposed between a given one of the members and ones of the stops 123, so that it imparts a camber into that member during the fabrication, as will be appreciated by a person skilled in the art. Referring to Figures 2C and 2D (from which details of the cam clamping member 123 are omitted for clarity), the holes with which the truss is to be preconfigured are then drilled by passing the rotating bit 130 of a drill through each guide hole 125. Nail plates 7, one of which can be seen in each of Figures 9A and 9B, are then applied at each panel point, to either side thereof, to interconnect the respective members at that panel point (by application of clamping pressure to either side, the pressure applied to the side which is lowermost on the jig being through the respective pressure plate (which is thus displaced upwardly to engage the nail plate 7 on that side). The thus formed truss 10, preconfigured with correctly located holes 8 formed by the drill bit 130 is then removed from the jig 100.

The application of the nail plates 7 may, of course, precede the drilling of the holes 8, without departure from the invention.

Advantageously, the jig 100 is thus utilised not only to hold the truss members in the correct configuration for interconnection, but also to guide the drill bit whereby holes 8 which receive fasteners 20 (typically tie-down screws) to secure the truss 10 to an underlying support structure, such as a beam or rafter 30A as shown in Figure 9A or a top plate 30B as shown in Figure 9B, is correctly located. Typically, the correct location of the central axis of the hole 8 is 25mm or 35mm inward of the part of the truss which vertically overlies an outer face of the support member 30A/30B when the truss is *in situ,* that part being the "heel point" (the location where the tip of the bottom chord chamfered end meets the top chord 5 abutting that end) in the case of the gable truss described and illustrated. Correspondingly, the central axis of the hole 125 is inset 25mm or 35mm from the aforementioned side face of the member 123.

The member 124 is configured with a second guide hole, as can best be seen in Figures 2A to 2D, the central axis of that guide hole being inset from a laterally inner side face 125B of the member 124, which face extends parallel to that axis, the same distance as the guide hole 125 is inset from the laterally outer side face. Accordingly, the stationary member or block 124 can be mounted to the frame 122 of the other heel box (in the same orientation as shown in Figures 2A to 2D) such that the laterally inner side face defines the datum on that heel box whereby the second guide hole is correctly positioned for formation of the hole 8 through the other heel of the truss. Advantageously, blocks 124 thus have the versatility to define the drilling guide at either position.

The positions of and number of pairs of members 123, 180/124 on the station boxes 120 can be varied according to the configuration of the truss and the locations at which a truss is to be preconfigured with holes 8.

Members 123 and 180/124 in a given cooperating pair of such members can, depending on the application in question, clamp respective one of the members of the truss being fabricated or plural ones of such members.

Although, in the present embodiment, the datum on each heel box 120 is defined by the laterally outer side face 125A, the datum on either or each of the members 3 and 124 can vary without departure from the invention; for example, it may take the form of a marking arranged to align with the datum on the other of those members.

Shown in Figure 3A is station box upper frame 121 and, mounted to that frame, a guide/stop member 124' in accordance with a second preferred embodiment of the invention. The upper frame 121 (which is the same as that described above in connection with the first embodiment) comprises opposed parallel side members 121A, a transverse member 121B which interconnects the members 121A at one end thereof, and a transverse member 121C, interconnecting the side members 121A at the other end thereof, the member 121C being secured the members 121A via fasteners 121D and spot welds (not shown) and arranged for mounting of the guide/stop 124/124' thereon. Referring to Figure 3B, the guide/stop 124', as is the guide/stop 124, formed therethrough with spaced apart mounting holes 126 which receive fasteners 127 (typically screws), those fasteners being received by corresponding mounting holes 128 formed through the support member 121C to mount the guide/stop thereto.

The stop/guide member 124' is identical to the stop member 124 though is additionally configured with oblique holes 125' each defining a further guide for a drill bit to ensure correct location and orientation of a hole, formed by the drill bit, with which the truss is to be preconfigured, and respective datums 125A', each of which takes the form of a marking (being a groove in the example shown) arranged to align with a datum on one member - typically a web member - of the truss, whereby a respective one of the holes 125' on the station box 120 is laterally positioned to guide a drill bit such that a hole drilled thereby in/through another member - typically a bottom chord member - at a panel point comprising the two members is at the desired position and in the desired orientation. In this regard, it is not uncommon for a truss to be "internally supported", at a panel point other than a heel joint thereof, often in addition to being supported at its heels. Loads at the panel point transferred between the supporting structure, typically comprising a wall structure, and the truss overlying it generally comprise both downward and upward reactions, so the positioning of the "internal support" webs and the tie-down fixing over the support is critical.

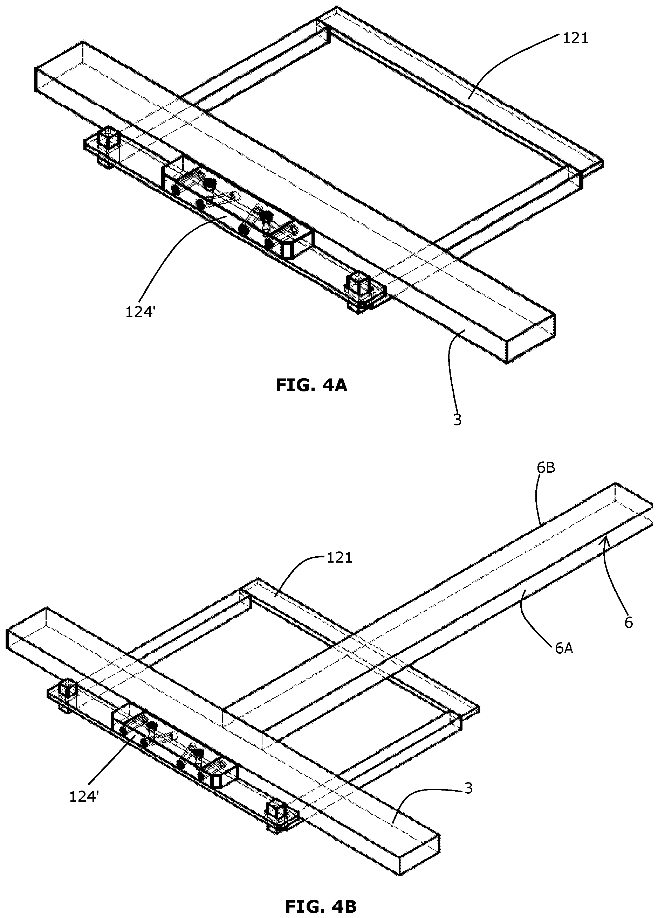

Figures 4A and 4B show successive stages in the formation of an internal panel point defined by a junction between a bottom chord member 3 and a perpendicular web member 6 of a truss - e.g. as shown at Figure 10B - fabricated using the jig 100 in which a member 124' is applied to frame 121 of one of the base rail boxes 120. Member 3 is arranged on base rail boxes 120, including that (illustrated) to the frame 121 (illustrated) of which the member 124' is applied, and member 6 is arranged on the latter base rail box (as well as, if appropriate, on ones of the station boxes on a given apex rail). The members 3 and 6 are correctly positioned, as are the other members of the truss (likewise supported on boxes 120), and the truss members are held/clamped in position by the stops 123, 180/124'.

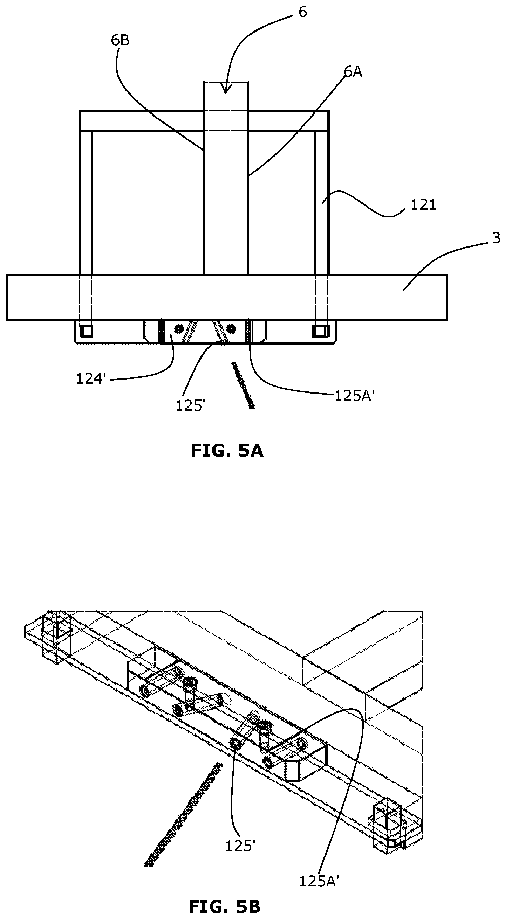

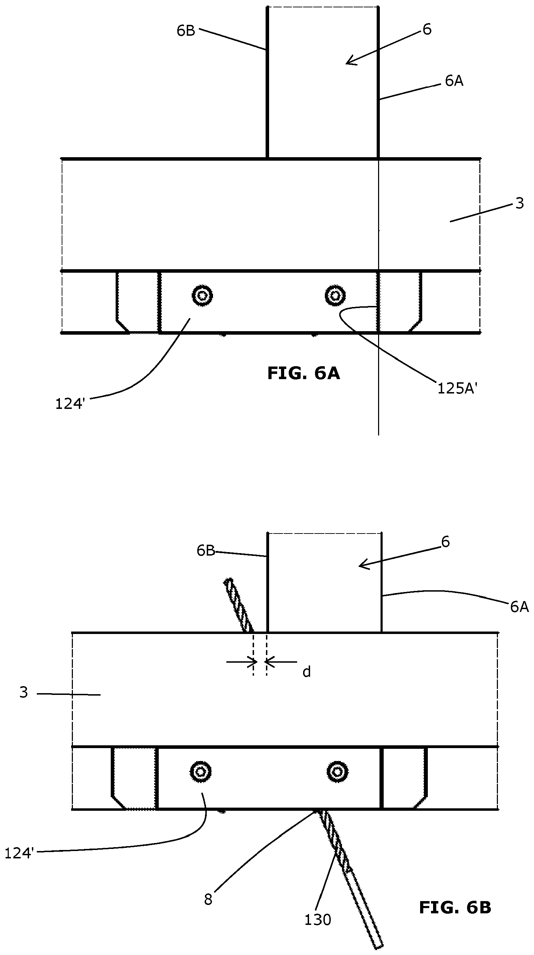

Referring also to Figures 5A, 5B, 6A and 6B, the box 120 to the frame 121 of which the member 124' is applied is positioned such that the marker/datum (groove) 125A' associated with one of the guide holes 125' in that member is aligned (by sight) with a respective datum on the web member 6, the latter datum in the example shown being an edge 6A of the web member 6, whereby that hole is accurately positioned to guide drill bit 130 and a hole thereby drilled through the web member 3 is thus at the desired position/orientation. In the example shown, the position/orientation is such that the hole exits the top of the bottom chord 3 a set distance d (see Figure 6B) clear of the other edge 6B of the web member 6, the distance d being sufficient that the head of the screw to be received through the drilled hole will bed onto the top of the bottom chord 3 and the portion of that screw which projects from the bottom of the bottom chord 3 and is received into the underlying support member affixes centrally in that member.

Again, either or each of the data defined by the member 124' and a truss member can vary, according to the application at hand, , and the application of the nail plates 7 may precede the drilling of hole(s) 8, without departure from the invention.

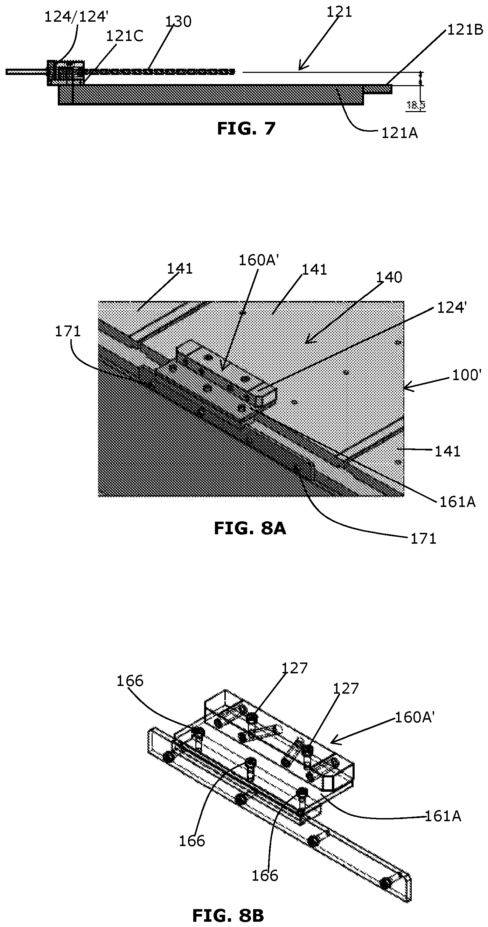

Figure 7 shows the manner in which the drill bit 130 is guided by the stop/guide member 124/124'.

Figures 10A and 10B show a truss 10' *in situ* atop an underlying support structure (exemplified by top plate 30B) fabricated using the jig 100 in accordance with another preferred embodiment of the present invention. In each of the assemblies shown in these drawings, a preformed hole 8 in the truss 10' is drilled through the bottom chord member 3 at a position where that member does not form part of a heel in the truss 10'. By appropriately configuring and arranging the stops 123, 124/124', respective guide holes 125/125' therein can be positioned such that respective holes 8 drilled into the truss by the drill bit, duly guided in those holes, can be accurately and repeatedly formed at whichever locations and in whichever orientations are desired according to the particular application. The hole 8 can be formed, using a member 124, so as to extend perpendicular to the bottom chord axis, as shown in Figure 10A, or formed, using a member 124', oblique to that axis, as shown in Figure 10B.

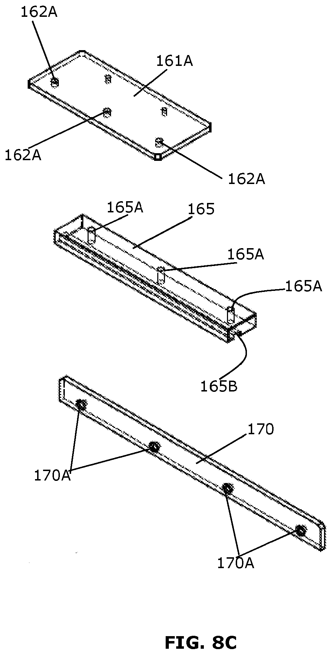

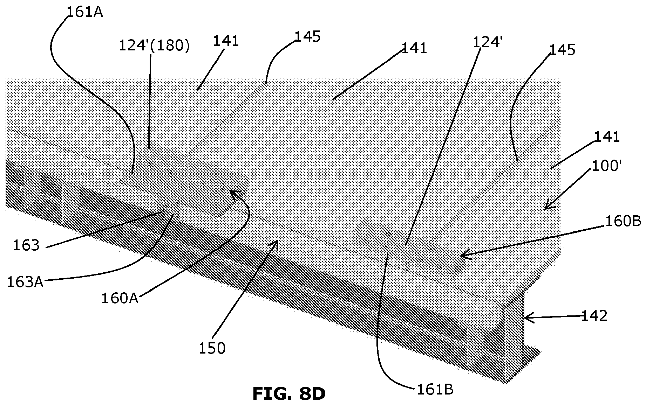

The invention has application to alternative types of jig, including in particular a table jig or "table press" 100' shown in Figures 8A and 8D. The jig 100' comprises a table 140 which is comprised of panel sections 141 arranged one-beside-another to define the support structure on which the truss members are to be arranged, and a base structure 142 on which the panel sections 141 are supported. Adjacent edges of the panel sections in each pair of adjacent panel sections are configured and arranged so as to define a respective slot 145, each of the slots 145 extending away from a rail 150 at an edge of the table and at right angles to that edge/rail. The adjacent panel sections in any given pair can be separately formed and arranged such that gaps between adjacent edges thereof define the slot 145, or instead be integrally formed as parts of a unitary panel configured with a groove or channel defining the slot 145.

Figure 8D shows guide/stop assemblies 160A and 160B with which the jig 100' is provided. Guide/stop assembly 160A comprises a guide/stop member 124', a base 161A, to which the guide/stop 124' is secured (via fasteners 127 received through holes 126 and into the base 161A), a grub screw 163 and a grub-screw support portion 163A attached to the base 161 A. A rail or track 150 is arranged at an edge of the table, to be engaged by the assembly 160A, the position of the assembly 160A along the rail/track 150 being adjustable.

Assembly 160A, is to be used as a stop, and to drill a hole, at an internal panel point (a panel point other than a heel of the truss), and is able to be slid along the track 150 and clamped into the appropriate position therealong by rotating the grub screw 163 (relative to support portion 163A) such that it is urged tightly against the rail or track 150.

To clamp the truss members together prior to pressing, in a similar fashion to the cam clamps used in the portal gantry/individual jig box application, round stops are inserted into the slots in the table at the relevant positions and cam clamps are slotted over them and rotated to tighten the truss members together, or timber wedges are knocked in to position against the stop to achieve the same.

Assembly 160B, with reference again to Figure 8D, comprises a stop/guide 124' and a base 161B, to which the guide/stop 124' is secured (by fasteners 127 received through holes 126 and into the base 161B). Assembly 160B is used for drilling a hole at a heel of the truss and is fixed down to the underlying table surface, with screws or similar or through the vertical slot 145 in the table, so that the upright abutment face 124A of the member 124' thereof that is abutted to the bottom face 3A of the bottom chord member 3 is correctly aligned with the upright abutment face 124A of the member 124' of assembly 160A, though there may be a difference to allow for a pre-camber that is manufactured into the truss bottom chord. To allow for pre-camber assembly 161B can be bolted through the slot so its position across the table surface can be easily altered for different truss profiles.

In the interests of economy and interchangeability, preferred thickness/height dimensioning of particular components is as described below.

The overall standard thickness of a truss (i.e. the members thereof) with or without pressed nail-plates is approximately 35-39mm and standard thicknesses of steel plate are 6mm and 25mm. This means that the drilling guide holes 125/125' can be centrally positioned (vertically) in the blocks 124' with the plate of which each of the bases 161A and 161B is comprised having a thickness of 6mm. When the block is secured to the base (mounting plate) 161A /161/B, the centre of each guide hole is spaced approximately 18.5mm above the plane in which the table surface lies, as is the centreline of each truss member on that surface, whereby the/each drilled hole is centrally located with respect to the thickness dimension of the truss/member.

The mounting plate 121C shown in Figure 3A is also 6mm thick, whereby the centre of each guide hole is, correspondingly, spaced approximately 18.5mm above the plane in which the members 121A, 121B of the station box frames 121 contact the truss members so as to support them, as is the centreline of each of the truss members so supported, whereby the/each drilled hole is centrally located with respect to the thickness dimension of the truss/member.

Either of the stop/guide assemblies can vary without departure from the invention. For example, with reference to Figures 8A to 8C, an alternative guide/stop assembly 160A' comprises, in addition to guide/stop 124' and base 161A, fasteners 127 securing the guide/stop 124' to the base 161A, and a guide member 165 secured to an underside of the base 161A at a proximal end thereof by fasteners 166 (typically screws) received through mounting holes 162A and in the base plate 161A and into corresponding mounting holes 165A in the guide member 165. The guide member 165 is configured with a downwardly opening slot or groove 165B. The edge of the table is provided with a track or rail 170 which is secured to the table structure by fasteners 171 (typically screws) received through mounting holes 170A in the rail 170.

In each of the assemblies 160A, 160B and 160A', the stop/guide 124' can, of course, be replaced with the stop/guide 124 without departure from invention.

Advantageously, each of the members 124 and 124' is configurationally symmetrical about each of a central upright plane therethrough extending parallel to the axes of the holes 125 therein/perpendicular to abutment face 124A thereof and the aforementioned plane from which the opposed top 125C and bottom 125D faces thereof are equally spaced, such that they are useable when inverted about either or each of those two planes (being appropriately proportioned to that end). In particular, each of the members 124 and 124' can thus be used for both left- and right-hand internal supports and heels without the need for measurement.

The jig 100 or 100' configured as appropriate with one or more members 124/124', advantageously, is used both to fabricate the truss and, while the members of the truss remain fixed in position thereon, to guide the drilling of the hole(s), eliminating separate handling which would be required for the hole(s) to be formed before or after the truss members are arranged on the jig. The/each hole is thus formed quickly, accurately and repeatably. Owing to correct hole positioning being assured, fixing of the truss to the underlying support structure, by application of the fastener, can be effected rapidly and easily, so that a tradesperson working at height to apply the fastener is not subj ected to unnecessary hazards and can be relatively unskilled. More particularly, the tradesperson, other than having to ensure that the fasteners, duly inserted in the preformed holes arranged to receive them, are driven home following that positioning, need have no input into the formation of the connection between the truss and the support structure. Certification of the connection can thus be established easily; in particular, an inspector may be able to certify the connection merely by confirming visually that the fasteners have been driven fully into position (i.e. that the head of each screw is hard up against the component within which that screw is pre-secured, or within a preformed hole in which that screw, is received).

The attendant improvements to safety are achieved in combination with improvements to, rather than at the expense of, manufacturing efficiency and accuracy.

While various embodiments of the present invention have been described above, it should be understood that they have been presented by way of example only, and not by way of limitation. Thus, the present invention should not be limited by any of the above described exemplary embodiments. The invention is limited by the appended claims.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

## Claims

1. A jig (100; 100') for forming a truss (10; 10'), which comprises interconnected elongate members (3, 5, 6) and is to be part of a building structure, the jig comprising a support structure (112, 114, 120; 140, 141) on which the members can be arranged, and stops (123, 124, 180; 124') adapted to abut, at predetermined positions, ones of the members so arranged and thus to hold the members fixed for interconnection, the jig being configured with at least one guide (124; 124') adapted to guide a rotating drill bit (130) such that a hole (8) in the truss drilled by the bit is correctly positioned,
**characterised in that** the or each guide (124; 124') comprises a body and a passage (125; 125') through the body to guide the drill bit (130) axially therein, wherein the or each body is defined by a said stop (124; 124').

2. A jig (100; 100') according to claim 1, wherein at least one stop (124; 124') which defines a said body is relocatable with respect to the support structure (112, 114, 120; 140, 141) so as to be able to abut at least one said member (3, 5, 6) at another said predetermined position, and optionally wherein the or each relocatable stop is symmetrical and/or reversible so as to be able to abut said at least one of the members at the other predetermined position.

3. A jig (100; 100') according to any one of claims 1 or 2, wherein the, each, or at least one said stop (124; 124') which defines a said body is configured with plural said passages (125; 125'), so as to comprise plural said guides each comprising that body and a respective one the plural passages.

4. A jig (100; 100') according to claim 3, wherein in the, each, or at least one said stop (124; 124') is configured with plural said passages (125; 125'), the passages comprise ones which extend along respective axes which are not parallel.

5. A jig (100; 100') according to claim 3 or 4, wherein in the, each, or at least one said stop (124') is configured with plural said passages (125; 125'), the passages comprise ones arranged at separate positions along an axis along which the stop is arranged to abut a said member in a plane of the truss (10; 10').

6. A jig (100; 100') according to any one of claims 3 to 5, wherein in the, each, or at least one said, stop (124; 124') configured with plural said passages (125; 125'), the passages comprise at least one said passage (125) which extends at right angles to an axis along which the stop is arranged to abut a said member (3, 5, 6) in a plane of the truss (10; 10'), such that the hole (8) drilled by the bit (130) guided axially in that passage is at right angles to a longitudinal axis of the member and/or wherein in the, each, or at least one said, stop configured with plural said passages, the passages comprise at least one said passage (125') which extends oblique to an axis along which the stop is arranged to abut a said member in a plane of the truss, such that the hole drilled by the bit guided axially in that passage is oblique to a longitudinal axis of the member.

7. A jig (100; 100') according to any one of the preceding claims, wherein the stops (123, 124, 180; 124') and guide(s) (124; 124') are positionable at variable locations within a plane of the truss (10; 10') according to the configuration of the truss and the dimensions of the members (3, 5, 6).

8. A jig (100) according to any one of the preceding claims, wherein the support structure (112, 114, 120) comprises spaced apart stands (120) each of which is configured to support ones of the members (3, 5, 6) that are to be interconnected at a respective panel point in the truss (10; 10'), and wherein the guides (124; 124') and stops (123, 124, 180; 124') are arranged on ones of the stands.

9. A jig (100) according to claim 8 as appended to claim 7, wherein the stands (120) are disposable at variable positions such that the stops (123, 124, 180; 124') and guide(s) (124; 124') are positioned at said locations.

10. A jig (100) according to claim 8 or 9, wherein the stands (120) include a heel stand adapted to support ones of the members (3, 5) that are to be interconnected at a heel at one of opposed ends of the truss (10; 10'), on which stand is arranged at least one said guide (124; 124') such that the drill bit (130) guided thereby forms a said hole (8) in the heel at said one end, and optionally wherein the stands include a heel stand adapted to support ones of the members that are to be interconnected at a heel at the other of said opposed ends of the truss, on which stand is arranged at least one said guide such that the drill bit guided thereby forms a said hole in the heel at said other end.

11. A jig (100) according to claim 8 or 9, wherein the stands (120) include at least one which is adapted to support ones of the members (3, 6) that are to be interconnected at an internal panel point in the truss (10; 10'), on which stand is arranged at least one said guide (124; 124') such that the drill bit (130) guided thereby forms a said hole (8) at the internal panel point or wherein the stands are configured such that opposed sides of said ones of the members arranged on the stands are accessible to permit application of nail plates to both of said sides to effect the interconnection at each panel point.

12. A jig (100') according to any one of claims 1 to 7, wherein the support structure (140, 141) comprises a table on which the stops (123, 124, 180; 124') and guide(s) (124; 124') are arranged.

13. A jig (100') according to claim 12 as appended to claim 7, wherein the stops (123, 124, 180; 124') and guides (124; 124') are disposable at variable positions on the table to be positioned at said locations.

14. A method of forming, using a jig (100; 100') according to any one of the preceding claims, said truss (10; 10'), the method including, with the members (3, 5, 6) arranged on the support structure (112, 114, 120; 140, 141) and said ones of the members abutted by the stops (123, 124, 180; 124') at said predetermined positions such that the members are held fixed by the stops, effecting guidance of a said rotating drill bit (130) by the or each guide (124; 124'), such that the or each drilled hole is correctly positioned.

15. A method according to claim 14, wherein the or each stop (124; 124') defining the body of a said guide (124; 124') is arranged such that the hole (8) drilled by the bit (130) guided axially in the passage (125; 125') thereof passes through a said member (3, 5, 6) which is abutted directly by that stop and/or wherein the or each hole is to receive a through fastener (20) for securing the truss (10; 10') to a support structure underlying it in the building structure.

## Patentansprüche

1. Spannvorrichtung (100; 100') zum Bilden eines Trägers (10; 10'), der miteinander verbundene längliche Elemente (3, 5, 6) aufweist und Teil einer Gebäudestruktur sein soll, wobei die Spannvorrichtung eine Stützstruktur (112, 114, 120; 140, 141) aufweist, auf der die Elemente angeordnet werden können, und Anschläge (123, 124, 180; 124'), die angepasst sind, um an vorbestimmten Positionen an einem der so angeordneten Elemente anzuliegen und somit die Elemente für eine Verbindung miteinander zu fixieren, wobei die Spannvorrichtung mit zumindest einer Führung (124; 124') ausgestaltet ist, die angepasst ist, um eine rotierende Bohrkrone (130) so zu führen, dass eine Öffnung (8) in dem Träger, die von der Krone gebohrt wird, korrekt angeordnet ist,
**dadurch gekennzeichnet, dass** die oder jede Führung (124; 124') einen Körper und einen Durchgang (125; 125') durch den Körper aufweist, um die Bohrkrone (130) axial darin zu führen, wobei der oder jeder Körper durch einen Anschlag (124; 124') definiert ist.

2. Spannvorrichtung (100; 100') nach Anspruch 1, wobei zumindest ein Anschlag (124; 124'), der den Körper definiert, relativ zu der Stützstruktur (112, 114, 120; 140, 141) verlagerbar ist, um an zumindest einem der Elemente (3, 5, 6) an einer anderen vorbestimmten Position anliegen zu können, und wobei optional der oder jeder verlagerbare Anschlag symmetrisch und/oder umkehrbar ist, um an dem zumindest einen der Elemente an der anderen vorbestimmten Position anliegen zu können.

3. Spannvorrichtung (100; 100') nach einem der Ansprüche 1 oder 2, wobei der, jeder oder zumindest ein Anschlag (124; 124'), der einen Körper definiert, mit einer Vielzahl von Durchgängen (125; 125') ausgestaltet ist, um eine Vielzahl von Führungen aufzuweisen, von denen jede diesen Körper und einen jeweiligen der mehreren Durchgänge aufweist.

4. Spannvorrichtung (100; 100') nach Anspruch 3, wobei in dem, jedem oder zumindest einem der Anschläge (124; 124') eine Vielzahl von Durchgängen (125; 125') ausgestaltet ist, wobei die Durchgänge solche aufweisen, die sich entlang entsprechender Achsen erstrecken, die nicht parallel sind.

5. Spannvorrichtung (100; 100') nach Anspruch 3 oder 4, wobei in dem, jedem oder zumindest einem der Anschläge (124') eine Vielzahl der Durchgänge (125; 125') ausgestaltet ist, wobei die Durchgänge solche aufweisen, die an separaten Positionen entlang einer Achse angeordnet sind, entlang derer der Anschlag angeordnet ist, um an einem der Elemente in einer Ebene des Trägers (10; 10') anzuliegen.

6. Spannvorrichtung (100; 100') nach einem der Ansprüche 3 bis 5, wobei in dem, jedem oder zumindest einem der Anschläge (124; 124'), der mit einer Vielzahl von Durchgängen (125; 125') ausgestaltet ist, die Durchgänge zumindest einen der Durchgänge (125) aufweisen, der sich rechtwinklig zu einer Achse erstreckt, entlang derer der Anschlag angeordnet ist, um an einem der Elemente (3, 5, 6) in einer Ebene des Trägers (10; 10') anzuliegen, sodass die Öffnung (8), die von der axial in diesem Durchgang geführten Bohrkrone (130) gebohrt wird, rechtwinklig zu einer Längsachse des Elements verläuft, und/oder wobei in dem, jedem oder dem zumindest einen mit einer Vielzahl von Durchgängen ausgestalteten Anschlag die Durchgänge zumindest einen Durchgang (125') aufweisen, der sich schräg zu einer Achse erstreckt, entlang derer der Anschlag ausgestaltet ist, um an einem der Elemente in einer Ebene des Trägers anzuliegen, sodass die Öffnung, die von der axial in diesem Durchgang geführten Bohrkrone gebohrt wird, schräg zu einer Längsachse des Elements verläuft.

7. Spannvorrichtung (100; 100') nach einem der vorhergehenden Ansprüche, wobei die Anschläge (123, 124, 180; 124') und die Führung(en) (124; 124') gemäß der Ausgestaltung des Trägers und den Abmessungen der Elemente (3, 5, 6) an variablen Stellen innerhalb einer Ebene des Trägers (10; 10') positionierbar sind.

8. Spannvorrichtung (100) nach einem der vorhergehenden Ansprüche, wobei die Stützstruktur (112, 114, 120) beabstandete Ständer (120) aufweist, von denen jeder zum Stützen eines der Elemente (3, 5, 6) ausgestaltet ist, die an einem jeweiligen Plattenpunkt in dem Träger (10; 10') miteinander zu verbinden sind, und wobei die Führungen (124; 124') und Anschläge (123, 124, 180; 124') an einem der Ständer angeordnet sind.

9. Spannvorrichtung (100) nach Anspruch 8, wie angehängt an Anspruch 7, wobei die Ständer (120) an variablen Positionen angeordnet werden können, sodass die Anschläge (123, 124, 180; 124') und Führung(en) (124; 124') an diesen Stellen positioniert sind.

10. Spannvorrichtung (100) nach Anspruch 8 oder 9, wobei die Ständer (120) einen Absatzständer beinhalten, der zum Stützen eines der Elemente (3, 5) angepasst ist, die an einem Absatz an einem der gegenüberliegenden Enden des Trägers (10; 10') miteinander zu verbinden sind, wobei an diesem Ständer zumindest eine der Führungen (124; 124') derart angeordnet ist, dass die dadurch geführte Bohrkrone (130) die Öffnung (8) in dem Absatz an dem einen Ende ausbildet, und wobei die Ständer optional einen Absatzständer beinhalten, der zum Stützen eines der Elemente angepasst ist, die an einem Absatz an dem anderen der gegenüberliegenden Enden des Trägers miteinander zu verbinden sind, wobei an dem Ständer zumindest eine der Führungen derart angeordnet ist, dass die dadurch geführte Bohrkrone die Öffnung in dem Absatz an dem anderen Ende ausbildet.

11. Spannvorrichtung (100) nach Anspruch 8 oder 9, wobei die Ständer (120) zumindest einen beinhalten, der zum Stützen eines der Elemente (3, 6) angepasst ist, die an einem inneren Plattenpunkt in dem Träger (10; 10') miteinander zu verbinden sind, wobei an dem Ständer zumindest eine der Führungen (124; 124') so angeordnet ist, dass die dadurch geführte Bohrkrone (130) eine Öffnung (8) an dem inneren Plattenpunkt ausbildet, oder wobei die Ständer so ausgestaltet sind, dass gegenüberliegende Seiten der an den Ständern angeordneten Elemente zugänglich sind, um die Anwendung von Nagelplatten an beiden dieser Seiten zu ermöglichen, um die Verbindung an jedem Plattenpunkt zu erzielen.

12. Spannvorrichtung (100') nach einem der Ansprüche 1 bis 7, wobei die Stützstruktur (140, 141) einen Tisch aufweist, auf dem die Anschläge (123, 124, 180; 124') und die Führung(en) (124; 124') angeordnet sind.

13. Spannvorrichtung (100') nach Anspruch 12, wie angehängt an Anspruch 7, wobei die Anschläge (123, 124, 180; 124') und Führungen (124; 124') an variablen Positionen auf dem Tisch angeordnet werden können, um an den Stellen positioniert zu werden.

14. Verfahren zum Ausbilden des Trägers (10; 10') unter Verwendung einer Spannvorrichtung (100; 100') nach einem der vorhergehenden Ansprüche, wobei das Verfahren, mit den an den Stützstrukturen (112, 114, 120; 140, 141) angeordneten Elementen (3, 5, 6) und dem einen der Elemente, die an den Anschlägen (123, 124, 180; 124') an den vorbestimmten Positionen anliegen, sodass die Elemente durch die Anschläge fixiert gehalten werden, das erzielte Führen einer rotierenden Bohrkrone (130) durch die oder jede Führung (124; 124') beinhaltet, sodass die oder jede gebohrte Öffnung korrekt positioniert ist.

15. Verfahren nach Anspruch 14, wobei der oder jeder Anschlag (124; 124'), der den Körper einer Führung (124; 124') definiert, so angeordnet ist, dass die Öffnung (8), die von der axial in dessen Durchgang (125; 125') geführten Bohrkrone (130) gebohrt wird, durch ein Element (3, 5, 6) verläuft, das direkt an diesem Anschlag anliegt, und/oder wobei die oder jede Öffnung ein durchgehendes Befestigungselement (20) zur Befestigung des Trägers (10; 10') an einer darunter liegenden Stützstruktur in der Gebäudestruktur aufnehmen soll.

## Revendications

1. Gabarit (100 ; 100') pour la formation d'une ferme (10 ; 10'), qui comprend des éléments allongés interconnectés (3, 5, 6) et doit faire partie d'une structure de bâtiment, le gabarit comprenant une structure de support (112, 114, 120 ; 140, 141) sur lesquels les éléments peuvent être agencés, et des butées (123, 124, 180 ; 124') adaptées pour venir en butée, sur des positions prédéterminées, sur des éléments ainsi agencés et ainsi maintenir les éléments fixes pour une interconnexion, le gabarit étant configuré avec au moins un guide (124 ; 124') adapté pour guider un trépan rotatif (130) de sorte qu'un trou (8) dans la ferme forée par le trépan soit correctement positionné,
**caractérisé en ce que** le ou chacun parmi les guides (124 ; 124') comprend un corps et un passage (125 ; 125') à travers le corps pour guider le trépan (130) axialement dans celui-ci, dans lequel le ou chaque corps est défini par une dite butée (124 ; 124').

2. Gabarit (100 ; 100') selon la revendication 1, dans lequel au moins une butée (124 ; 124') qui définit un dit corps repositionnable par rapport à la structure de support (112, 114, 120 ; 140, 141) de manière à être capable de venir en butée contre au moins un parmi lesdits éléments (3, 5, 6) sur une autre parmi lesdites positions prédéterminées, et éventuellement dans lequel la ou chacune parmi les butées repositionnables est symétrique et/ou réversible de manière à être capable de venir en butée contre au moins un parmi les éléments sur l'autre position prédéterminée.

3. Gabarit (100 ; 100') selon l'une quelconque des revendications 1 ou 2, dans lequel la, chacune, ou au moins une parmi lesdites butées (124 ; 124') qui définit un dit corps est configurée avec plusieurs parmi lesdits passages (125 ; 125'), de manière à comprendre plusieurs parmi lesdits guides comprenant chacun ce corps et un respectif parmi les plusieurs passages.

4. Gabarit (100 ; 100') selon la revendication 3, dans lequel, la, chacune, ou au moins une, parmi lesdites butées (124 ; 124') est configurée avec plusieurs parmi lesdits passages (125 ; 125'), les passages en comprenant certains qui s'étendent le long d'axes respectifs qui ne sont pas parallèles.

5. Gabarit (100 ; 100') selon la revendication 3 ou 4, dans lequel, dans la, chacune, ou au moins une parmi lesdites butées (124') est configurée avec plusieurs parmi lesdits passages (125 ; 125'), les passages en comprenant certains agencés sur des positions séparées le long d'un axe le long duquel la butée est agencée pour buter contre un parmi lesdits éléments dans un plan de la ferme (10 ; 10').

6. Gabarit (100 ; 100') selon l'une quelconque des revendications 3 à 5, dans lequel chacune, ou au moins une parmi lesdites butées (124 ; 124') est configurée avec plusieurs parmi lesdits passages (125 ; 125'), les passages comprenant au moins un parmi lesdits passages (125) qui s'étend à angle droit par rapport à un axe le long duquel la butée est agencée pour venir en butée contre un parmi lesdits éléments (3, 5, 6) dans un plan de la ferme (10 ; 10'), de sorte que le trou (8) foré par le trépan (130) guidé axialement dans ce passage est à angle droit par rapport à un axe longitudinal de l'élément et/ou dans lequel, chacune, ou au moins une parmi lesdites butées est configurée avec plusieurs parmi lesdits passages, les passages comprenant au moins un parmi lesdits passage (125') qui s'étend obliquement par rapport à un axe le long duquel la butée est agencée pour venir en butée contre un parmi lesdits éléments dans un plan de la ferme, de sorte que le trou foré par le trépan guidé axialement dans ce passage est oblique par rapport à un axe longitudinal de l'élément.

7. Gabarit (100 ; 100') selon l'une quelconque des revendications précédentes, dans lequel les butées (123, 124, 180 ; 124') et le ou les guide(s) (124 ; 124') sont positionnables sur des emplacements variables dans un plan de la ferme (10 ; 10') selon la configuration de la ferme et les dimensions des éléments (3, 5, 6).

8. Gabarit (100) selon l'une quelconque des revendications précédentes, dans lequel la structure de support (112, 114, 120) comprend des montants espacés (120) dont chacun est configuré pour supporter certains des éléments (3, 5, 6) qui doivent être interconnectés sur un point de panneau respectif dans la ferme (10 ; 10'), et dans lequel les guides (124 ; 124') et les butées (123, 124, 180 ; 124') sont agencés sur certains parmi les montants.

9. Gabarit (100) selon la revendication 8 lorsqu'elle dépend de la revendication 7, dans lequel les montants (120) peuvent être disposés sur des positions variables de sorte que les butées (123, 124, 180 ; 124') et le ou les guide(s) (124 ; 124') sont positionnés sur lesdits emplacements.

10. Gabarit (100) selon la revendication 8 ou 9, dans lequel les supports (120) comprennent un montant de talon adapté pour supporter certains des éléments (3, 5) qui doivent être interconnectés sur un talon sur une parmi les extrémités opposées de la ferme (10 ; 10'), sur lequel montant est agencé au moins un parmi lesdits guides (124 ; 124') de sorte que le trépan (130) ainsi guidé forme un desdits trous (8) dans le talon sur ladite première extrémité, et éventuellement dans lequel les montants comprennent un montant de talon adapté pour supporter certains des éléments qui doivent être interconnectés sur un talon sur l'autre parmi lesdites extrémités opposées de la ferme, sur lequel montant est agencé au moins un parmi lesdits guides de sorte que le trépan ainsi guidé forme un desdits trous dans le talon sur ladite autre extrémité.

11. Gabarit (100) selon la revendication 8 ou 9, dans lequel les montants (120) comprennent au moins un élément qui est adapté pour supporter certains des éléments (3, 6) qui doivent être interconnectés sur un point de panneau interne dans la ferme (10 ; 10'), sur lequel montant est agencé au moins un parmi lesdits guides (124 ; 124') de sorte que le trépan (130) ainsi guidé forme un dit trou (8) sur le point de panneau interne ou dans lequel les montants sont configurés de sorte que des côtés opposés parmi lesdits éléments agencés sur les montants sont accessibles pour permettre l'application de plaques à clous sur les deux côtés pour effectuer l'interconnexion sur chaque point de panneau.

12. Gabarit (100') selon l'une quelconque des revendications 1 à 7, dans lequel la structure de support (140, 141) comprend une table sur laquelle les butées (123, 124, 180 ; 124') et le ou les guide(s) (124 ; 124') sont agencés.

13. Gabarit (100') selon la revendication 12 lorsqu'elle dépend de la revendication 7, dans lequel les butées (123, 124, 180 ; 124') et les guides (124 ; 124') peuvent être disposés sur des positions variables sur la table pour être positionnés sur lesdits emplacements.

14. Procédé de formage, à l'aide d'un gabarit (100 ; 100') selon l'une quelconque des revendications précédentes, ladite ferme (10 ; 10'), le procédé comprenant, avec les éléments (3, 5, 6) agencés sur la structure de support (112, 114, 120 ; 140, 141) et lesdits certains parmi les éléments étant aboutés par les butées (123, 124, 180 ; 124') sur lesdites positions prédéterminées de sorte que les éléments sont maintenus fixes par les butées, l'exécution du guidage d'un dit trépan rotatif (130) par le ou chaque guide (124 ; 124'), de sorte que le ou chaque trou foré est correctement positionné.

15. Procédé selon la revendication 14, dans lequel la ou chaque butée (124 ; 124') définissant le corps d'un dit guide (124 ; 124') est agencée de sorte que le trou (8) foré par le trépan (130) guidé axialement dans le passage (125 ; 125') de celui-ci passe à travers un dit élément (3, 5, 6) qui est abouté directement par cette butée et/ou dans lequel le ou chaque trou doit recevoir une fixation traversante (20) pour la fixation de la ferme ( 10 ; 10') à une structure de support sous-jacente dans la structure du bâtiment.
